# EUROPÄISCHE PATENTSCHRIFT

(11) **EP 1 121 769 B1**
(45) Veröffentlichungstag und Bekanntmachung des Hinweises auf die Patenterteilung: **17.12.2003**
(21) Anmeldenummer: 99970804.3
(22) Anmeldetag: 01.10.1999
(51) Int. Cl.: H04B 7/04, H01Q 21/28, H04Q 7/32

(54) **ANTENNENANORDNUNG FÜR EINE IN MEHREREN FREQUENZBEREICHEN BETREIBBARE FUNKSTATION UND FUNKSTATION**
ANTENNA ARRAY FOR A RADIO STATION WHICH CAN BE OPERATED IN A PLURALITY OF FREQUENCY RANGES, AND A RADIO STATION
SYSTEME D'ANTENNE POUR UNE STATION RADIO POUVANT FONCTIONNER DANS PLUSIEURS GAMMES DE FREQUENCES ET STATION RADIO

(30) Priorität: 15.10.1998 DE 19847660
(43) Veröffentlichungstag der Anmeldung: 08.08.2001
(73) Patentinhaber: SIEMENS AKTIENGESELLSCHAFT, 80333 München (DE)
(72) Erfinder: ECKERT, Rainer, D-81677 München (DE)
(86) Internationale Anmeldenummer: DE9903170
(87) Internationale Veröffentlichungsnummer: WO00024137

(56) Entgegenhaltungen:
- EP-A- 0 610 989
- EP-A- 0 801 473
- WO-A-96/22662
- US-A- 5 548 813
- US-A- 5 724 666

## Beschreibung

Die Erfindung bezieht sich auf eine Antennenanordnung für eine in mehreren Frequenzbereichen betreibbare Funkstation und eine Funkstation, insbesondere eine Multiband-Mobilstation.

Nationale Regulierungsbehörden teilen einen für ein Funksystem bzw. Mobilfunksystem, wie beispielsweise das GSM 900 (Global System for Mobile Communication)-System, vorgesehenen Frequenzbereich (um 900 MHz) in unterschiedliche Frequenzbänder auf, die dann unterschiedlichen Netzbetreibern, wie beispielsweise D1, D2, zugeteilt werden. Einem anderen Mobilfunksystem, dem DCS 1800 (Digital Communication System), ist ein anderer Frequenzbereich (um 1800 MHz) zugeordnet. Weiteren gegebenenfalls zukünftigen Mobilfunksystemen, wie dem sich in der Standardisierung befindlichen UMTS (Universal Mobile Telephony System) sind weitere unterschiedliche Frequenzbereiche zugeteilt. Im Falle eines Duplex-Systems können bei FDD (Frequency Division Duplex)-Systemen, wie dem GSM-System, für den Uplink (Mobilstation zur Basisstation) andere Frequenzbänder vorgesehen sein als für den Downlink (Basisstation zur Mobilstation). Der Duplexabstand beträgt dabei für das GSM-900-System 45 MHz und für das DCS-1800-System 95 MHz.

Im Rahmen dieser Anmeldung verwendete Begriffe und Beispiele beziehen sich auch oft auf ein GSM-Mobilfunksystem; sie sind jedoch keineswegs darauf beschränkt, sondern können anhand der Beschreibung von einem Fachmann auch leicht auf andere, gegebenenfalls zukünftige, Mobilfunksysteme, wie CDMA-Systeme, insbesondere Wide-Band-CDMA-Systeme oder TD/CDMA-Systeme, abgebildet werden.

Es sind in mehreren dieser Frequenzbereiche betreibbare Mobilstationen, sogenannte Dual-Band-Mobilstationen bzw. Multiband-Funkstationen, bekannt die es ermöglichen über mehrere dieser oben genannten Mobilfunksysteme alternativ zu kommunizieren.

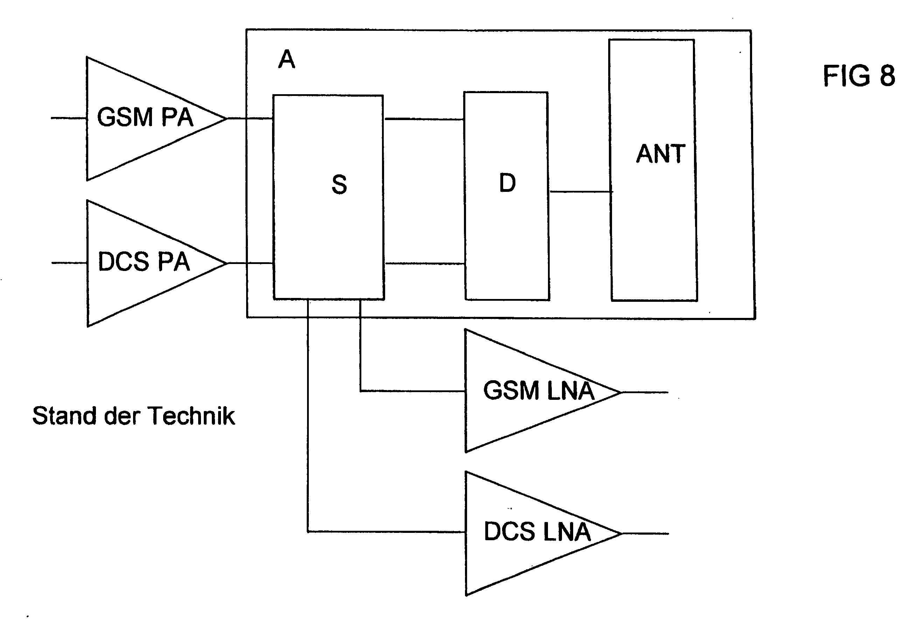

Figur 8 zeigt eine schematischen Darstellung eines Sende/Empfangskonzeptes derartiger herkömmlicher Mobilstationen. Entsprechend den unterschiedlichen Frequenzbereichen des GSM-Systems und des DCS-Systems, in denen die Mobilstation betrieben werden kann, sind unterschiedliche Sendeverstärker (Power Amplifier) GSM PA, DCS PA vorgesehen, deren Sendesignale über einen Antennenschalter S und einen Diplexer D, der im wesentlichen aus einem Filter besteht, oder Duplexer, einer Antenne ANT, wie beispielsweise einer Stabantenne zugeführt werden. In umgekehrter Richtung werden Empfangssignale durch die Antenne ANT empfangen über den Diplexer D und den Antennenschalter S den den unterschiedlichen Frequenzbereichen der unterschiedlichen Mobilfunksysteme entsprechenden Empfangsverstärkern (Low Noise Ampflifier) GSM LNA, DCS LNA zugeführt. Ein Antennenschalter S und ein Diplexer D oder Duplexer sind dabei in der Antennenanordnung enthalten oder der Antenne zugeordnet.

Nun besteht allerdings bei Funkstationen insbesondere bei Mobilstationen in letzter Zeit zunehmend der Wunsch nach immer kleineren, handlicheren und leichteren Geräten.

Daher liegt der Erfindung die Aufgabe zugrunde, eine Antennenanordnung für eine in mehreren Frequenzbereichen betreibbare Funkstation anzugeben, die eine Realisierung von leichten und kleinen Funkstationen, insbesondere Mobilstationen ermöglicht.

Diese Aufgabe wird durch die Merkmale der unabhängigen Patentansprüche gelöst. Weiterbildungen ergeben sich aus den Unteransprüchen.

Die Erfindung beruht also auf dem Gedanken, mehrere Antennen zu verwenden, wobei für Sende- und Empfangssignale unterschiedliche Antennen vorgesehen sind.

Dadurch wird erreicht, daß auf Antennenschalter verzichtet werden kann, und so eine Antennenanordnung für eine in mehreren Frequenzbereichen betreibbare Funkstation leicht und klein realisiert werden kann.

Bei einer Weiterbildung sind auch für unterschiedliche Frequenzbereiche unterschiedliche Antennen vorgesehen.

Dadurch wird erreicht, daß auch auf Diplexer und Duplexer verzichtet werden kann, und so eine Antennenanordnung noch leichter und kleiner realisiert werden kann.

Eine Weiterbildung der Erfindung sieht vor, daß sich die Polarisationsrichtung einer Antenne für Sendesignale von der Polarisationsrichtung einer Antenne für Empfangssignale unterscheidet.

So ist es möglich, die Anregung einer Empfangsantenne durch eine entsprechende in derselben Funkstation angebrachte Sendeantenne zu verhindern.

Die Erfindung wird im folgenden anhand bevorzugter Ausführungsbeispiele näher beschrieben, zu deren Erläuterung die nachstehend aufgelisteten Figuren dienen:
Figur 1 ein Prinzipschaltbild einer Antennenanordnung mit unterschiedlichen Antennen für Sendesignale und Empfangssignale;
Figur 2 ein Prinzipschaltbild einer Antennenanordnung mit unterschiedlichen Antennen für unterschiedliche Frequenzbereiche, Sendesignale und Empfangssignale;
Figur 3 ein Prinzipschaltbild einer Antennenanordnung mit unterschiedlichen Antennen für Sendesignale und Empfangssignale und für Empfangssignale unterschiedlicher Frequenzbereiche;
Figur 4 ein Prinzipschaltbild einer Antennenanordnung mit unterschiedlichen Antennen für Sendesignale und Empfangssignale und für Sendesignale unterschiedlicher Frequenzbereiche;
Figur 5 Schnittdarstellung einer Patch-Antenne;
Figur 6 Antennenanordnung mit unterschiedlichen Polarisationsrichtungen für Sende- und Empfangssignale;
Figur 7 Blockschaltbild einer Funkstation;
Figur 8 Blockschaltbild einer herkömmlichen Antennenanordnung.

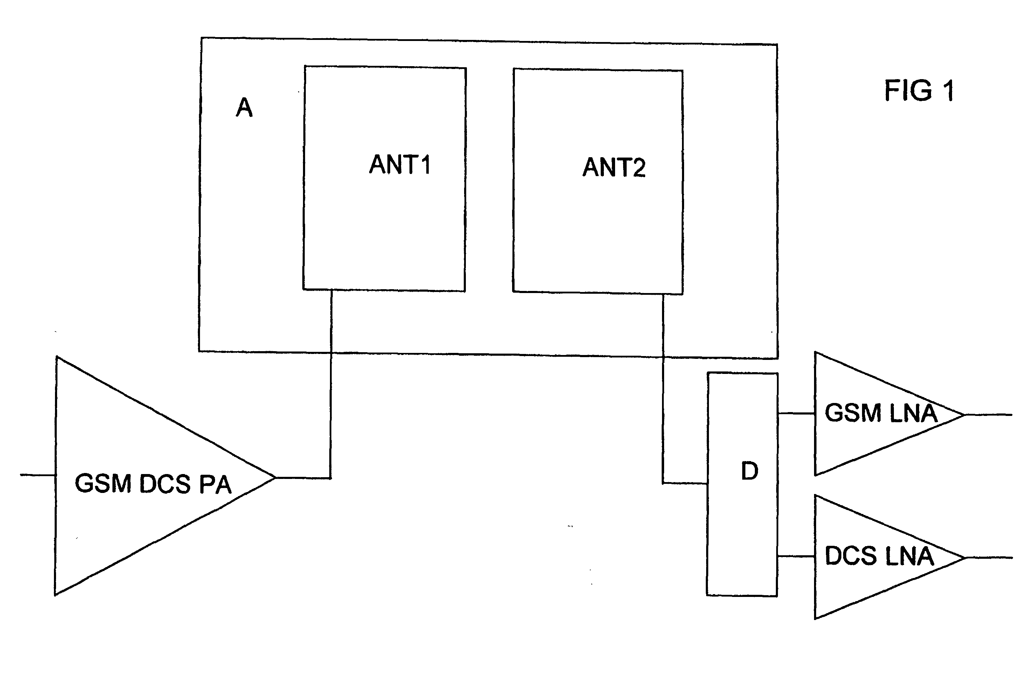

Figur 1 zeigt ein Blockschaltbild einer Antennenanordnung A, bei der für Sende- und Empfangsbetrieb unterschiedliche Antennen ANT vorgesehen sind. Um die Ausführungsbeispiele klar darzustellen, sind die Blockschaltbilder der Antennenanordnungen stark vereinfacht und zeigen daher keine passiven Bauelemente, wie beispielsweise Filter oder Anpaßschaltungen auf 50 Ohm, oder Leistungsregelschleifen der Verstärker. Die Sende- bzw. Empfangsverstärker können auch stellvertretend für Sende- bzw. Empfangspfad betrachtet werden.

Eine "Antenne" enthält im Rahmen dieser Anmeldung auch einen Resonator und eine diesem Resonator zugeordnete Ankopplung.

GSM- und DCS-Sendesignale werden durch einen GSM-DCS-Leistungsverstärker GSM DCS PA verstärkt und über eine Ankopplung der zugehörigen an das Sendefrequenzband des GSM 900 Frequenzbereichs und an das Sendefrequenzband des DCS 1800 Frequenzbereichs angepaßten Antenne ANT1 zugeführt und abgestrahlt.

GSM- und DCS-Empfangssignale werden von einer zweiten an das Empfangsfrequenzband des DCS 1800 Frequenzbereichs und an das Empfangsfrequenzband des GSM 900 Frequenzbereichs angepaßten Antenne ANT2 empfangen, und nach der entsprechenden Filterung durch einen Diplexer von entsprechenden Empfangsverstärkern DCS LNA (Low Noise Amplifier) GSM LNA verstärkt. So ist es möglich auf Antennenschalter zu verzichten und dadurch eine leichte und kleine Antennenanordnung zu realisieren.

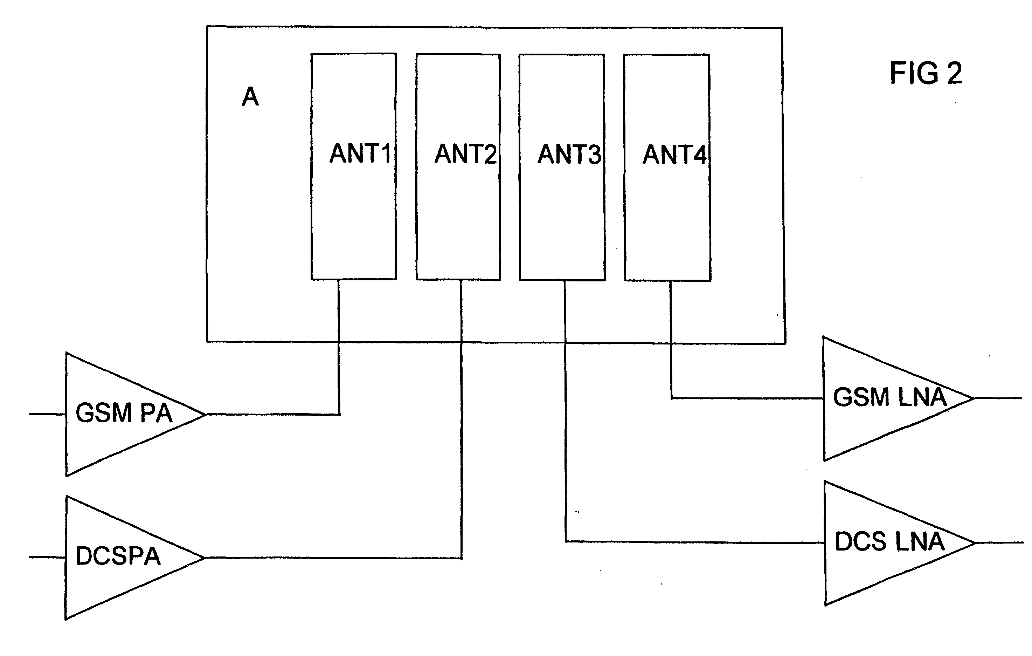

Figur 2 zeigt ein Blockschaltbild einer Antennenanordnung A, bei der für unterschiedliche Frequenzbänder unterschiedliche Antennen ANT vorgesehen sind und für Sende- und Empfangsbetrieb ebenfalls unterschiedliche Antennen vorgesehen sind.

GSM-Sendesignale werden durch einen GSM-Leistungsverstärker GSM PA verstärkt und über eine Ankopplung der zugehörigen an das Sendefrequenzband des GSM 900 Frequenzbereichs angepaßten Antenne ANT1 zugeführt. DCS-Sendesignale werden von einem entsprechenden anderen Leistungsverstärker DCS PA verstärkt und einer zweiten an das Sendefrequenzband des DCS 1800 Frequenzbereichs angepaßten Antenne ANT2 zugeführt und abgestrahlt.

DCS-Empfangssignale werden von einer dritten an das Empfangsfrequenzband des DCS 1800 Frequenzbereichs angepaßten Antenne ANT3 empfangen, von einem entsprechenden Empfangsverstärker DCS LNA (Low Noise Amplifier) verstärkt und nach einer Demodulation und Filterung einem digitalen Signalprozessor einer Funkstation zugeführt. GSM-Empfangssignale werden von einer vierten entsprechend angepaßten Antenne ANT4 empfangen und von einer entsprechenden Empfangsverstärkereinrichtung GSM LNA verstärkt. So ist es möglich auf Antennenschalter und Diplexer zu verzichten und dadurch eine leichte und kleine Antennenanordnung zu realisieren.

Bei Ausgestaltungen der Erfindung sind weitere Antennen vorgesehen, die entweder ebenfalls zur Realisierung eines Frequenzduplexbetriebs, allerdings in einem anderen Frequenzbereich oder zur Realisierung eines Zeitduplexbetriebs in einem anderen Frequenzbereich dienen, denen zur Signaltrennung Antennenschalter oder Diplexer zugeordnet sein können. Beispiele für weitere Frequenzbereiche, sind die Frequenzbereiche, die für Mobilfunksysteme der 3. Generation, wie das sich in der Standardisierung befindliche UMTS-System (Kombination aus Wideband-CDMA und TD/CDMA), oder andere CDMA-Systeme oder das DECT-System oder andere Schnurlossysteme.

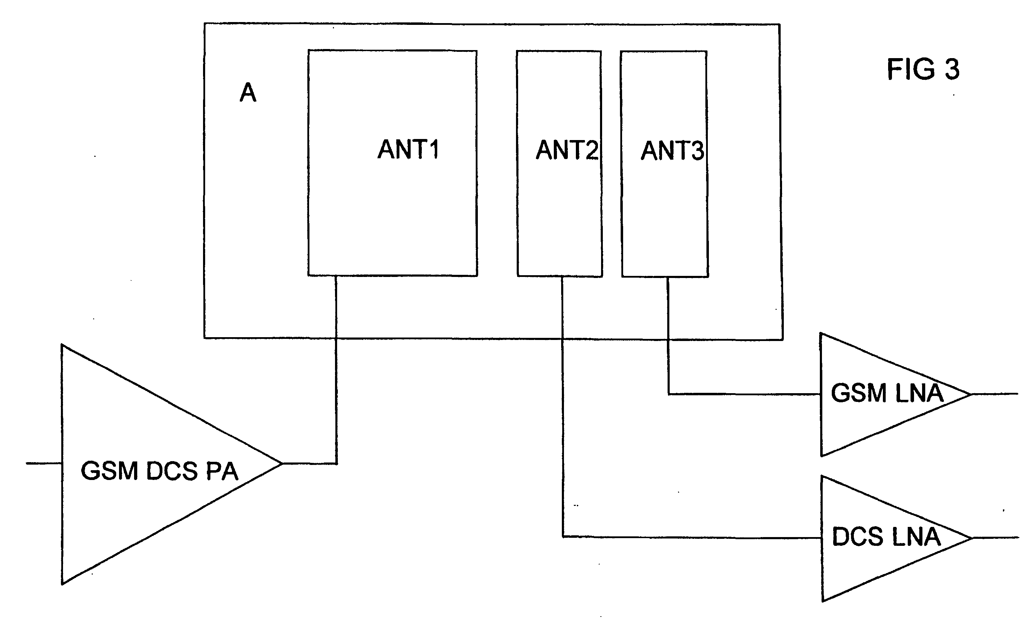

In Figur 3 ist eine Ausführungsvariante dargestellt, die sich gegenüber der in Figur 1 dargestellten Ausgestaltung darin unterscheidet, daß für die Empfangssignale entsprechend den unterschiedlichen Frequenzbereichen unterschiedliche Antennen ANT2, ANT3 vorgesehen sind, und so auf einen Diplexer verzichtet werden kann.

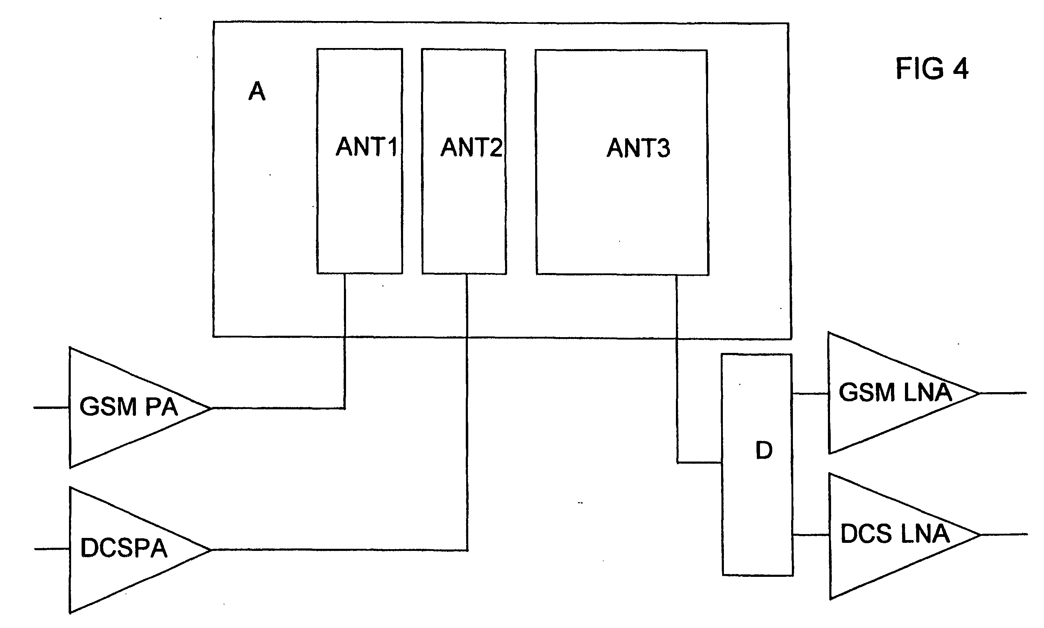

In Figur 4 ist eine Ausführungsvariante dargestellt, die sich gegenüber der in Figur 1 dargestellten Ausgestaltung darin unterscheidet, daß für die Sendesignale entsprechend den unterschiedlichen Frequenzbereichen unterschiedliche Sendeverstärker GSM PA, DCS PA und unterschiedliche Antennen vorgesehen sind.

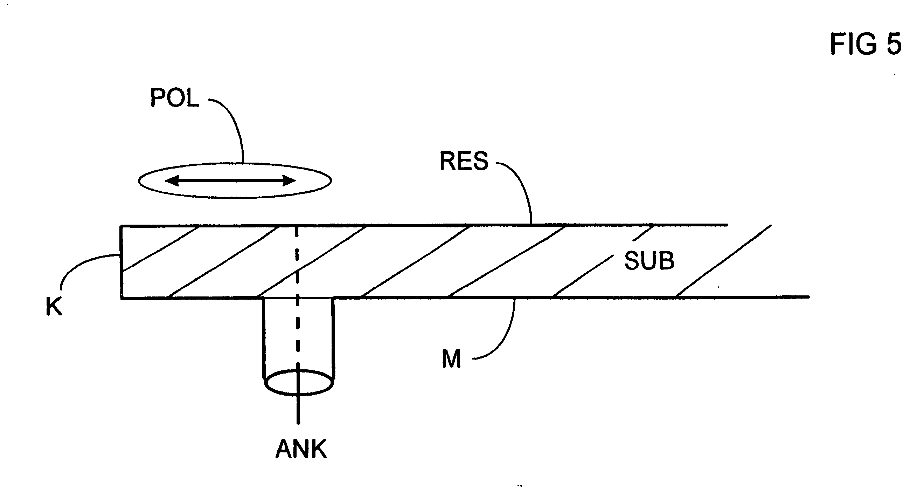

Figur 5 zeigt eine Schnittdarstellung einer Patch-Antenne bestehend aus einer Ankopplung ANK, einer Massefläche M, einem isolierenden, beispielsweise keramischen Substrat SUB, einem Resonator RES und einem Kurzschluß K zwischen Resonator RES und Massefläche M. Durch den Doppelpfeil wird die Polarisationsrichtung POL einer derartigen Patch-Antenne angezeigt. Die Ankopplung der Signale kann auch anders als hier dargestellt, beispielsweise kapazitiv erfolgen.

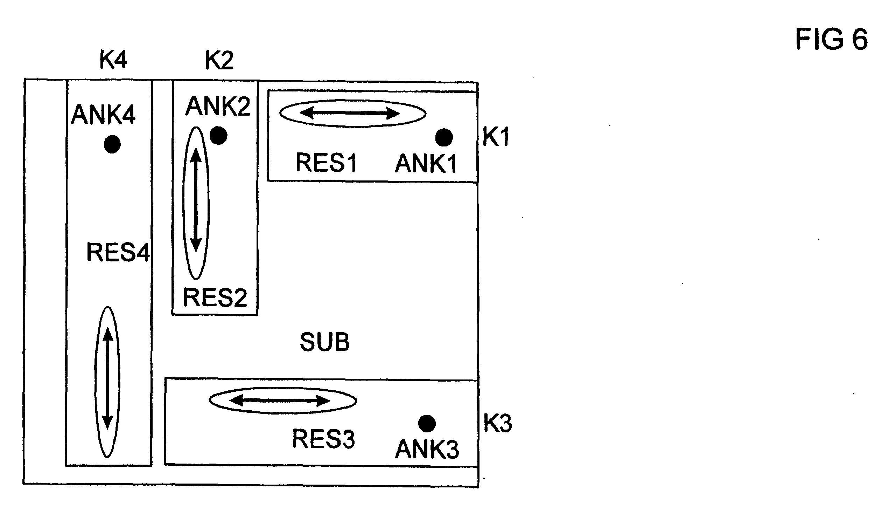

Figur 6 zeigt eine Antennenanordnung die entsprechend einem Sende- und Empfangsbetrieb in zwei Frequenzbereichen aus vier Antennen besteht, die auf einem Träger, wie beispielsweise einer Platine oder einem Substrat SUB, angeordnet sind mit entsprechenden Ankopplungen ANK1-4, Resonatoren RES1-4 und Kurzschlüssen K1-4 zwischen Massefläche und Resonatoren.

Um die Anregung einer Empfangsantenne durch die entsprechende Sendeantenne im gleichen Frequenzbereich möglichst zu verhindern, stehen bei einer Ausführungsvariante der Erfindung die Polarisationsrichtungen der entsprechenden Sende- und Empfangsantennen senkrecht aufeinander.

Bei einer anderen Ausgestaltung der Erfindung sind die unterschiedlichen Antennen physikalisch getrennt und einen möglichst großen Abstand voneinander aufweisend realisiert. Auch dies kann zu einer Verhinderung der oben erwähnten unerwünschten Anregungen führen.

Bei einer anderen Ausführungsvariante sind alle Antennen oder zumindest ein Teil der Antennen parallel zueinander angeordnet.

Bei einer weiteren Ausbildung der Erfindung handelt es sich bei den einzelnen Antennen oder Resonatoren um schmalbandige Antennen oder Resonatoren. Auch dies kann zu einer Verhinderung der oben erwähnten unerwünschten Anregungen führen.

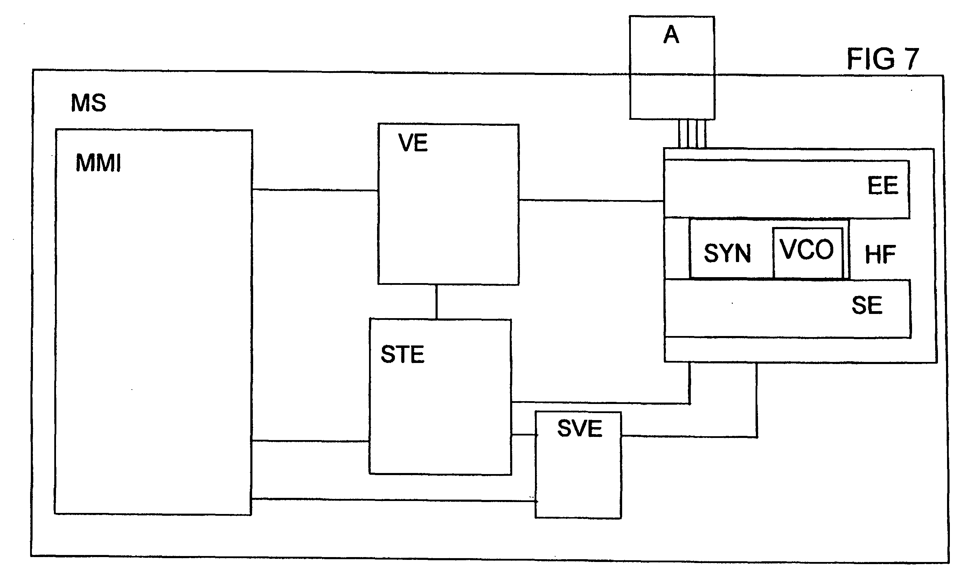

Figur 7 zeigt eine Funkstation, die insbesondere eine Mobilstation MS sein kann, bestehend aus einer Bedieneinheit MMI, einer Steuereinrichtung STE, einer Verarbeitungseinrichtung VE, einer Stromversorgungseinrichtung SVE, einer Empfangseinrichtung EE und einer Sendeeinrichtung SE.

Die Steuereinrichtung STE besteht im wesentlichen aus einem programmgesteuerten Mikrocontroler, der alle wesentlichen Elemente und Funktionen der Funkstation steuert und kontrolliert. Die Verarbeitungseinrichtung VE kann auch durch einen digitalen Signalprozessor DSP gebildet sein.

Der Hochfrequenzteil HF besteht aus der Sendeeinrichtung SE, mit einem Modulator und einem Verstärker und einer Empfangseinrichtung EE mit einem Demodulator und ebenfalls einem Verstärker.

Der Sendeeinrichtung SE und der Empfangseinrichtung EE wird über den Synthesizer SYN die Frequenz eines spannungsgeregelten Oszilators VCO zugeführt. Mittels des spannungsgesteuerten Oszillators VCO kann auch der Systemtakt zur Taktung von Prozessoreinrichtungen des Gerätes erzeugt werden. Über die Antennenanordnung A werden wie in Figur 1 gezeigt Empfangssignale empfangen und Sendesignale gesendet.

## Patentansprüche

1. Mobilstation zum Betrieb innerhalb unterschiedlicher Mobilfunksysteme, welchen jeweils ein anderer Frequenzbereich zugeordnet ist, wobei jeder Frequenzbereich jeweils ein Sendefrequenzband und ein Empfangsfrequenzband aufweist, mit
- einer ersten Sendeantenne zum Senden von Signalen innerhalb des Sendefrequenzbandes eines ersten Frequenzbereichs,
- einer zweiten Sendeantenne zum Senden von Signalen innerhalb des Sendefrequenzbandes eines zweiten Frequenzbereichs,
- einer ersten Empfangsantenne zum Empfangen von Signalen innerhalb des Empfangsfrequenzbandes des ersten Frequenzbereichs, und
- einer zweiten Empfangsantenne zum Empfangen von Signalen innerhalb des Empfangsfrequenzbahdes des zweiten Frequenzbereichs.

2. Mobilstation nach Anspruch 1, bei der
- die erste Sendeantenne mit der zweiten Sendeantenne identisch ist.

3. Mobilstation nach einem der Ansprüche 1 oder 2, bei der die erste Empfangsantenne mit der zweiten Empfangsantenne identisch ist.

## Claims

1. Mobile station for operation within different mobile radio systems which are each allocated a different frequency band, with each frequency band having in each case one transmission frequency band and one reception frequency band, having
- a first transmitting antenna for transmitting signals within the transmission frequency band of a first frequency range,
- a second transmitting antenna for transmitting signals within the transmission frequency band of a second frequency range,
- a first receiving antenna for receiving signals within the reception frequency band of the first frequency range, and
- a second receiving antenna for receiving signals within the reception frequency band of the second frequency range.

2. Mobile station according to Claim 1, in which
- the first transmitting antenna is identical to the second transmitting antenna.

3. Mobile station according to one of Claims 1 or 2, in which the first receiving antenna is identical to the second receiving antenna.

## Revendications

1. Poste mobile destiné à fonctionner dans le cadre de différents systèmes de radio mobile, à chacun desquels est affectée une gamme différente de fréquences, chaque gamme de fréquences comportant une bande de fréquences d'émission et une bande de fréquences de réception, et comportant
- une première antenne d'émission destinée à l'émission de signaux à l'intérieur d'une bande de fréquences d'émission d'une première gamme de fréquences,
- une deuxième antenne d'émission destinée à l'émission de signaux à l'intérieur d'une bande de fréquences d'émission d'une deuxième gamme de fréquences,
- une première antenne de réception destinée à la réception de signaux à l'intérieur d'une bande de fréquences de réception de la première gamme de fréquences et
- une deuxième antenne de réception destinée à la réception de signaux à l'intérieur d'une bande de fréquences de réception de la deuxième gamme de fréquences.

2. Poste mobile selon la revendication 1 dans lequel
- la première antenne d'émission est identique à la deuxième antenne d'émission.

3. Poste mobile selon l'une des revendications 1 ou 2 dans lequel la première antenne de réception est identique à la deuxième antenne de réception.
